# DEMANDE DE BREVET EUROPEEN

(11) **EP 4 817 872 A1**
(43) Date de publication de la demande: **07.10.2026**
(21) Numéro de dépôt: 26169286.7
(22) Date de dépôt: 30.03.2026
(51) Int. Cl.: B32B 27/12, B32B 5/02, B32B 27/06, B32B 27/30, B32B 27/36, E04B 1/62

(54) **MEMBRANE PARE-VAPEUR COMPRENANT UN BIOPOLYMÈRE À BASE D'AMIDON**

(30) Priorité: 03.04.2025 FR 2503515
(71) Demandeur: Saint-Gobain Isover, 92400 Courbevoie (FR)
(72) Inventeur: RIEGERT, Maeva, 93300 AUBERVILLIERS (FR); CHENAL, Marion, 92400 COURBEVOIE (FR); CHILINGUIRIAN, Harayer, 93300 AUBERVILLIERS (FR)
(74) Mandataire: Saint-Gobain Recherche

(57) **Abrégé**

L'invention concerne un procédé d'amélioration de l'étanchéité à l'air d'un bâtiment ou d'une pièce d'un bâtiment comprenant l'application d'une membrane pare-vapeur sur la face interne des murs dudit bâtiment ou de ladite pièce d'un bâtiment.

## Description

L'invention concerne une membrane pare-vapeur hygrorégulante et un procédé d'amélioration de l'étanchéité à l'air de bâtiments ou de pièces de bâtiments utilisant la membrane pare-vapeur de l'invention.

La présente invention concerne en particulier une membrane pare-vapeur comportant une couche comprenant de l'amidon et un polymère hydrophobe.

On connaît depuis de nombreuses années des membranes pare-vapeur hygrorégulatrices, ou hygrorégulantes, dont la perméabilité à la vapeur d'eau varie en fonction de l'humidité de l'air. Pour les raisons expliquées par exemple dans la demande WO96/33321, on cherche à obtenir des membranes qui laissent passer facilement la vapeur d'eau lorsque l'humidité relative (HR) est élevée (70% à 100 % de HR) et qui la bloquent efficacement à faible humidité relative (50 % de HR et moins).

De telles membranes, lorsqu'elles sont disposées sur la face interne d'un matériau d'isolation thermique (face tournée vers l'intérieur d'un bâtiment ou d'une pièce), empêchent le plus possible pendant la saison froide et sèche la vapeur d'eau de pénétrer depuis l'intérieur du bâtiment dans l'espace entre la membrane et le mur et de se condenser sur ce dernier (paroi froide). A l'inverse, à la saison chaude, la perméabilité élevée de la membrane permet à l'humidité éventuellement présente dans les éléments structurels du bâti de s'évacuer vers l'intérieur du bâtiment. Cette propriété est particulièrement importante dans le cas des constructions neuves où, lors de l'installation, certains éléments peuvent avoir une teneur en eau très élevée due aux conditions de stockage, mais également dans le cas d'infiltrations d'eau dans des structures existantes. Dans les deux cas, il est important de pouvoir laisser l'ensemble de la structure sécher de manière efficace en été, vers l'extérieur et l'intérieur du bâtiment. Ce besoin est crucial notamment si les éléments composant le système sont propices à la prolifération de microorganismes.

De telles membranes pare-vapeur ayant un comportement différencié en fonction des conditions d'humidité relative qui l'entourent sont fréquemment qualifiées d'« intelligentes» (en anglais *Smart Vapor Retarder* (SVR)). Dans la présente demande les adjectifs « hygrorégulateur », « hygrorégulant » et « intelligent » sont utilisés comme des synonymes brsqu'ils décrivent la variation de la perméabilité à la vapeur d'eau des membranes pare-vapeur.

Il est courant d'exprimer la perméabilité à la vapeur d'eau d'une membrane en termes d'« épaisseur d'air équivalente » pour ladiffusion de vapeur d'eau (S_{d}). Cette épaisseur est exprimée en mètres et correspond à l'épaisseur de la couche d'air qui opposerait une résistance équivalente à la diffusion de la vapeur d'eau. Par conséquent, plus l'épaisseur d'air équivalente est importante, moins la membrane est perméable à la vapeur d'eau. L'épaisseur d'air équivalente (S_{d}) peut être déterminée conformément aux normes EN1931 et EN ISO12572.

Une membrane pare-vapeur hygrorégulante est généralement considérée comme étant d'autant plus intéressante et performante que son épaisseur d'air équivalente est élevée à faible humidité relative et faible à forte humidité relative.

On connaît des membranes pare-vapeur à base de polymères organiques synthétiques fabriqués à partir de monomères pétrosourcés. Les polymères organiques synthétiques les plus fréquemment décrits et utilisés sont les polyamides, notamment le polycaprolactame, le poly(alcool vinylique) (PVOH), les copolymères d'éthylène et d'acétate de vinyle et/ou d'alcool vinylique (EVA et EVOH). Les polymères les plus hydrophiles (PVOH, EVOH) peuvent être associés, dans des structures multi-couches, à de minces couches plus hydrophobes, notamment à base de polyoléfines, telles que le polyéthylène, le polypropylène et des copolymères d'éthylène et de propylène. On peut citer à titre d'exemples de documents décrivant de telles membranes pare-vapeur « intelligentes » les documents WO2007/010388, WO2006/034381, WO2005/110892, US7008890, US 6808772 et US 6878455.

Pour des raisons environnementales, on a cherché à remplacer en tout ou partie des polymères organiques synthétiques à base de polymères pétrosourcés, généralement non biodégradables, par polymères biosourcés et/ou biodégradables. Ces polymères biosourcés et/ou biodégradables seront appelés ci-après « biopolymères ». Les biopolymères sont de préférence biosourcés, c'est-à-dire à base de matériaux d'origine biologique renouvelables à court terme.

Les biopolymères biosourcés englobent à la fois les polymères organiques naturels, présents en tant que tels dans la biomasse, les polymères organiques obtenus par modification physique et/ou chimique de ces polymères naturels, et les polymères organiques synthétiques obtenus par polymérisation d'ingrédients biosourcés.

Les membranes à base de biopolymères sont le plus souvent assez hydrophiles et leur perméabilité à la vapeur d'eau est élevée. L'épaisseur d'air équivalente de ces membranes est généralement inférieure à 1 m et sa valeur absolue ne varie que peu avec l'humidité relative de l'atmosphère qui les entoure. Ces membranes restent donc extrêmement perméables à la vapeur d'eau quelles que soient les conditions environnantes.

Sans vouloir être lié par une quelconque théorie, on pense que la faible variation de la perméabilité à la vapeur d'eau de ces membranes assez hydrophiles peut être attribuée à l'effet plastifiant de l'eau qui se « dissout » dans la membrane, même à faible humidité. Plus l'humidité ambiante est élevée, plus le matériau de la membrane est plastifié par l'eau et plus la diffusion des molécules d'eau au sein de la membrane est aisée.

Le principal inconvénient de ces membranes constituées de biopolymères, en vue d'une possible utilisation en tant que pare-vapeurs hygrorégulants, réside donc dans le fait que leur perméabilité à la vapeur d'eau reste globalement trop élevée à faible humidité relative pour qu'elles puissent fonctionner de manière satisfaisante pendant la saison froide et sèche. Leur perméabilité à la vapeur d'eau à faible humidité relative est trop élevée, ce qui se traduit par des valeurs Sd trop faibles. De telles membranes ne forment ainsi pas une barrière suffisante à la vapeur d'eau provenant de l'intérieur du bâtiment et n'empêchent pas assez efficacement la vapeur d'eau de pénétrer dans l'espace entre la membrane et le mur et de se condenser dans le matériau isolant et sur la face interne du mur extérieur.

Pour pallier cet inconvénient, la demande WO2023/237841 décrit une membrane composée d'une couche hydrophile à base de biopolymère sur laquelle est appliqué sur une face une très mince couche de polymère hydrophobe, très peu perméable à la vapeur d'eau. Cela permet d'accroître très significativement « l'intelligence » de membranes à base de biopolymères et de les rendre ainsi compatibles avec une utilisation en tant que membrane pare-vapeur dans le domaine du bâtiment.

Toutefois, ces membranes en partie biosourcées ne donnent pas entière satisfaction. Ces systèmes multi-couches comprennent plusieurs couches polymères de chimie différente. Or, ces membranes composées de différents polymères ne peuvent pas être recyclées car il est difficile de séparer les différentes couches en fin de vie et/ou il n'existe pas de circuit de recyclage propre à ces systèmes composites. Idéalement, il serait souhaitable que les membranes puissent être recyclées dans des circuits de recyclage de plastique connus tels que le recyclage de matière plastique de type polyoléfine, styrènique ou polychlorure de vinyle.

Il n'existe donc pas à ce jour de membrane pare-vapeur, notamment mono-couche, à base de biopolymère :
- présentant des bonnes propriétés hygrorégulantes et
- pouvant être facilement recyclée dans un circuit de recyclage connu.

Le demandeur a mis au point une membrane pare-vapeur satisfaisant ces propriétés et un procédé d'amélioration de l'étanchéité à l'air d'un bâtiment ou d'une pièce d'un bâtiment comprenant l'application de la membrane pare-vapeur sur la face interne des murs dudit bâtiment ou de ladite pièce d'un bâtiment.

L'invention concerne une membrane pare-vapeur hygrorégulante comprenant une partie active comprenant une première couche polymère active à base d'amidon et d'un polymère hydrophobe. La première couche polymère active à base d'amidon et d'un polymère hydrophobe est une même couche. Cela signifie que l'amidon et le polymère hydrophobe ne sont pas dans deux couches distinctes superposées.

L'invention concerne un système isolant comprenant un matériau isolant thermique et une membrane hygrorégulante selon l'invention.

L'invention concerne également un procédé d'amélioration de l'étanchéité à l'air d'un bâtiment ou d'une pièce d'un bâtiment comprenant l'application d'une membrane pare-vapeur hygrorégulante sur la face interne des murs dudit bâtiment ou de ladite pièce d'un bâtiment, caractérisé par le fait que la membrane comprend une partie active comprenant une première couche polymère active comprenant une couche polymère à base d'un mélange d'amidon et d'un polymère hydrophobe choisi dans le groupe constitué des homopolymères et copolymères de monomères vinyliques et de polyesters.

Selon l'invention, la « partie active » des membranes correspond à la partie assurant la fonction hygrorégulante.

La membrane pare-vapeur hygrorégulante peut présenter les caractéristiques suivantes seules ou en combinaison :
- la première couche polymère active a une épaisseur :
- supérieure à 30 µm, supérieure à 40 µm, supérieure à 50 µm ou supérieure à 60 µm, et/ou
- inférieure à 240 µm, inférieure à 200 µm, inférieure à 150 µm ou inférieure à 120 µm, et/ou
- le pourcentage en poids d'amidon et de polymère hydrophobe dans la première couche de polymère active est :
- supérieure à 50 %, supérieure à 60 %, supérieure à 70 %, supérieure à 80 %, supérieure à 85 %, supérieure à 90 % ou supérieure à 95 % et/ou
- inférieure à 100% ou inférieure à 95 %, et/ou
- le pourcentage en poids d'amidon, par rapport au poids d'amidon et de polymère hydrophobe dans la première couche de polymère active est :
- supérieure à 15 %, supérieure à 20 %, supérieure à 30 %, supérieure à 40 %, supérieure à 50 % ou supérieure à 60 %, et/ou
- inférieure à 85 %, inférieure à 80 %, inférieure à 70 %, inférieure à 60 % ou inférieure à 50 %,
- l'amidon est sous forme de particules dont le diamètre moyen est compris entre 2 et 50 µm, 2 et 40 µm ou entre 10 et 30 µm, et/ou
- l'amidon est choisi parmi l'amidon d'origine végétale marine, l'amidon de maïs, l'amidon de blé, l'amidon de pomme de terre, l'amidon de tapioca, l'amidon de pois, l'amidon de riz ou leurs mélanges, ou encore d'un polymère dérivé de l'amidon, et/ou
- la première couche de polymère active est une couche de polymère thermoplastique extrudée, et/ou
- elle comporte en outre une couche de renfort ou de protection qui est en contact avec la partie active de la membrane, et/ou
- la couche de renfort ou de protection est une couche perméable à l'air choisie parmi une grille, une plaque perforée, une mousse à porosité ouverte ou un textile tissé ou non tissé.

Une couche de polymère thermoplastique extrudée est une couche en matériau plastique thermoplastique (c'est-à-dire qui fond sous l'effet de la chaleur et se resolidifie en refroidissant) qui a été mis en forme par un procédé d'extrusion. Une couche de polymère thermoplastique extrudée se distingue d'une couche obtenue par dépôt d'une composition liquide qui est ensuite durcie par différentes techniques.

L'amidon est le polysaccharide de réserve le plus répandu chez les plantes. L'amidon est constitué d'unités de D-glucose. Deux types de macromolécules sont présents dans la structure de l'amidon, l'amylose de structure linéaire responsable des parties cristallines et l'amylopectine de structure ramifiée qui donne des zones amorphes. La teneur de l'amidon en ces deux types molécules varie avec l'espèce végétale. Par conséquent, la cristallinité de l'amidon sera aussi dépendante de sa provenance.

D'un point de vue microscopique l'amidon se présente sous la forme de particules ou grains. Chaque amidon, selon sa provenance, présente une gamme de diamètre moyen. La gamme de diamètre moyen dépend de l'origine de l'espère végétale dont l'amidon est issu et/ou d'éventuels traitements. Par exemple, la gamme de diamètre moyen de l'amidon de pomme de terre peut être comprise entre 15 et 100 µm alors que la gamme de diamètre moyen de l'amidon de riz peut être comprise entre 3 et 8 µm. De préférence, l'amidon présente un diamètre moyen comprise entre 2 et 100 µm.

L'amidon peut être choisi parmi un amidon d'origine végétale marine tel que d'algue, l'amidon de maïs, l'amidon de blé, l'amidon de pomme de terre, l'amidon de tapioca, l'amidon de pois, l'amidon de riz ou leurs mélanges, ou encore d'un polymère dérivé de l'amidon. L'amidon est de préférence de l'amidon d'origine végétale marine. L'amidon d'origine végétale marine peut avoir un diamètre moyen compris entre 10 et 30 µm.

Avantageusement, on choisit de préférence un amidon dont la gamme de diamètre moyen est inférieure à l'épaisseur de la couche active visée. Par exemple, si on souhaite avoir une couche active d'une épaisseur définie, on choisit avantageusement un amidon dont la gamme de diamètre moyen est inférieure à cette épaisseur définie.

Le polymère hydrophobe est choisi dans le groupe comprenant :
- les homopolymères et copolymères de monomères vinyliques,
- les homopolymères et copolymères de polyesters.

Les homopolymères et copolymères de monomères vinyliques sont choisis parmi :
- les polyoléfines telles que le polypropylène, le polyéthylène, le poly(éthylène-co-propylène),
- les polymères halogénés tels que le poly(chlorure de vinyle), le poly(chlorure de vinylidène), le poly(fluorure de vinyle), le poly (fluorure de vinylidène), le poly(tétrafluoroéthylène), et
- les polymères styréniques tels le polystyrène (PS), les copolymères styrène butadiène (SBR), les copolymères styrène acrylonitrile (SAN), les copolymères styrène butadiène acrylonitrile (ABS),
- le polyacrylonitrile.

Les homopolymères et copolymères de polyesters peuvent être des diesther / diol tels que les poly(éthylène téréphtalate) (PET).

Les polyoléfines peuvent être choisies parmi le groupe constitué par :
- un polyéthylene linaire ou branché tel qu'un polyéthylène ultra-basse densité (ULDPE), polyéthylène basse densité (LDPE), un polyéthylène très basse densité (VLDPE), un polyéthylène linaire basse densité (LLDPE), un polyéthylène moyenne densité (MDPE),un polyéthylène haute densité (HDPE), un polyéthylène haute densité et à masse moléculaire élevée (HDPE-HMW), un polyéthylène haute densité et à masse moléculaire ultra-élevée (HDPE-UHMW),
- un polypropylène tel que le polypropylène homopolymère (PP-H), le polypropylène copolymère (PP-C) bloc ou statistique, le polypropylène élastomère (PP-E), le polypropylène réticulé (PP-R),
- un poly(éthylène-co-propylène),
- un polyisobutylène, un polybut-1-ène, un poly-4-méthylpent-1-ène, un polyisoprène, un polybutadiène, un cyclopentène, un norbornène.

Selon l'invention, les polymères hydrophobes utilisés peuvent être des polymères recyclés et/ou biosourcés. Par exemple, on peut utiliser comme produit de départ des granules de polyéthylène recyclé.

Selon un mode de réalisation avantageux, la couche active de polymère comprend de l'amidon et une polyoléfine, de préférence du polyéthylène ou du polypropylène. L'amidon est de préférence de l'amidon d'origine végétale marine. Le polyéthylène est de préférence du polyéthylène linéaire ou branché, basse densité ou haute densité. L'amidon et le polyéthylène sont liés chimiquement par l'intermédiaire d'un agent de greffage. La couche est obtenue à partir de granulés d'amidon et de polyéthylène. De telles granules sont par exemple commercialisées par la société Eranova. Ces granulés sont notamment décrits dans la demande de brevet WO2017/046356 A1.

Avantageusement, la couche active de polymère peut comprendre d'autre composant tel qu'un composé plastifiant, un stabilisant, un antioxydant, un anti ultra-violet, un colorant, une charge, un agent favorisant la compatibilité entre composés, de l'eau ou un conservateur.

Les plastifiants peuvent être sélectionnés parmi les polyols à partir de triglycérides végétaux comme par exemple les triols : glycérine (monoglycérol), diglycérines ( diglycérol >90%), les polyglycérines 3 (triglycérol >35%), les polyglycérine 4 ( tri et tétraglycérol >65% ); les diols : éthylene glycol, diéthylène glycol, triéthylène glycol , propylène glycol (propane -1,2 diol) , triméthylène glycol (propane 1,3 diol) , butylène glycol (butane -1,3 diol ), n-butylène glycol (butane -1,4 diol ), 2,3-butylène glycol ou secbutylène glycol (butane-2,3-diol ) ; les tertaols :erythritol ; les pentols : Xylitol , Arabitol , Ribitol ; les hexols : sorbitol , galactitol , mannitol ; les heptols : Volemitol ; Les Disaccharides polyols à neuf fonctions OH : Maltitol, isomaltitol , lactitol et toute combinaison de ces composés.

La couche polymère active peut comprendre également des agents de greffage permettant le couplage par liaison de l'amidon et du polymère hydrophobe. Les agents de greffages peuvent être choisis parmi l'anhydride maléique (MAH), les péroxydes organiques, le polyéthylèneimine (PEI), l'isophorone diisocyanate (IPDI

Des images prises au microscope électronique montrent que même si l'amidon est lié au polymère hydrophobe, l'amidon est réparti au sein de la couche polymère active sous forme de particules. Le diamètre moyen de ces particules est compris entre 2 et 50 µm, 2 et 40 µm ou entre 10 et 30 µm. Ce diamètre moyen facilement peut être déterminé par traitement des images prises au microscope électronique.

Les tailles des particules d'amidon imposent une épaisseur minimale à la couche polymère active. De plus l'homogénéité de répartition des particules d'amidon sera aussi fonction de la taille des particules et du rapport de la taille des particules sur épaisseur de la première couche de polymère active.

La première couche polymère active peut comprendre d'autres composés tels qu'un plastifiant. Les proportions de plastifiant représentent de 0 à 35%, de 5 à 35% ou de15 à 35 % en poids du poids de la couche polymère active. Le plastifiant peut être choisi parmi les polyols tels que le glycérol, les polyglycérols, le sorbitol, le polyethylène glycol (PEG). Les proportions de polyols représentent de 0 à 35%, de 5 à 35% ou de15 à 35 % en poids du poids de la couche polymère active.

La couche polymère peut comprendre des additifs tels que des agents stabilisants, un agent compatibilisant, un agent biocide ou antimicrobien. Les proportions d'additifs peuvent représenter de 0 à 10 % ou de 0,1 à 10 % en poids du poids de la couche polymère active.

Les couches de polymère active peuvent être obtenues par n'importe quelle technique permettant l'obtention d'une couche d'épaisseur comprise entre 20 et 500 µm telles que :
- le pressage à haute température,
- l'extrusion de film à plat avec tirage selon une ou deux dimensions,
- l'extrusion-gonflage.

En général, on utilise comme matière première des granulés. Ces granulés sont produits par polymérisation de monomères liquides en plastique solide. Ils sont ensuite refroidis et découpés en petites boulettes. Ces granulés sont fondus et mis sous forme de couche. Les granulés peuvent comprendre directement un mélange d'amidon et de polymère hydrophobe. Il est aussi possible d'utiliser un mélange de granulés d'amidon et de granulés de polymère hydrophobe.

La couche peut aussi être obtenue par dispersion des particules d'amidon dans une dispersion de latex de polymère hydrophobe et durcissement à une température spécifique.

Selon un mode de réalisation avantageux, la couche active de polymère est mise en forme par pressage, extrusion à plat ou extrusion gonflage.

Le demandeur a découvert que les propriétés hygrorégulantes dépendent des matériaux mais également du procédé d'obtention de la couche.

L'obtention de bonne propriétés hygrorégulantes dépend de multiples facteurs. Les valeurs d'épaisseur d'air équivalente (Sd), caractéristique de la perméabilité à la vapeur d'eau d'une membrane, varient fortement en fonction des caractéristiques suivantes :
- la nature, la taille des particules et les proportions d'amidon choisies,
- la nature, la densité, la structure linaire ou branchée, et les proportions du polymère hydrophobe choisi,
- l'épaisseur de la couche de polymère active,
- le procédé d'obtention de la couche.

Les exemples mettent clairement en évidence ces phénomènes.

Sans vouloir être lié par une quelconque théorie, il est probable que les propriétés hygroregulantes dépendent de la cristallinité de la première couche de polymère active. Le polymère hydrophobe et l'amidon peuvent avoir chacun un taux de cristallinité plus ou moins important. Le taux de cristallinité dépend donc du choix des matériaux de départ.

Toutefois, le procédé d'obtention de la couche peut également impacter la cristallinité.

Le pressage conduit à d'excellentes propriétés hygrorégulantes. Cependant, ce procédé de fabrication ne permet pas d'obtenir facilement des épaisseurs inférieures à 140 µm.

Les procédés d'extrusion permettent d'obtenir des épaisseurs plus fines. Cependant, ces procédés conduisent à une augmentation, non désirée, des valeurs de Sd, en particulier en condition humide notamment par comparaison au procédé par pressage. Cela signifie que la membrane obtenue par extrusion est moins perméable à la vapeur d'eau en condition humide.

Les procédés d'extrusion peuvent induire modification de la cristallinité dans les couches en raison de l'étirement et du refroidissement soudain de la couche. En appliquant une contrainte de traction, l'orientation des chaînes moléculaires peut être significativement augmentée. L'étirement va imposer une organisation particulière des chaînes polymères dans la couche. Cela peut correspondre à une augmentation de la cristallinité. Or, plus la cristallinité d'un polymère est élevée, plus ses valeurs Sd sont élevées, c'est à dire moins il est perméable à la vapeur d'eau.

De plus, l'extrusion soufflée étire le film dans deux dimensions, tandis que l'extrusion en plan l'étire dans une direction. Le tirage dans deux directions devrait induire une augmentation encore plus forte de la cristallinité, préjudiciable au Sd en conditions humides. Par conséquent, lorsque la membrane doit être obtenue par extrusion, certains paramètres devront être choisis pour optimiser les propriétés hygrorégulantes.

L'épaisseur de la couche de polymère active impacte les valeurs d'épaisseur d'air équivalente Sd. Une réduction de l'épaisseur de la couche induit une diminution des valeurs Sd quelles que soient les conditions d'humidité relative.

Le taux de cristallinité d'un polymère cristallisé est défini par le rapport de la masse des phases cristallines à la masse du polymère étudié. De préférence, le taux de cristallinité de la couche active est compris entre 2 et 40%, 5 et 30 %, voire entre 10 et 25%. Les méthodes les plus couramment utilisées pour déterminer le taux de cristallinité sont la calorimétrie différentielle à balayage (DSC), la diffraction des rayons X, la spectroscopie infrarouge et la résonance magnétique nucléaire (RMN).

Il a également a été observé que la quantité des particules d'amidon et l'homogénéité de leur distribution au sein de la couche polymère active affectent fortement les valeurs d'épaisseur d'air équivalente Sd en condition humide (100% RH dans une coupelle fermée de la membrane et 80% appliqué autour de la coupelle) et en condition sèche (dessicant pour avoir 1%RH dans la coupelle fermée de la membrane, et 50% RH appliqué autour).

Selon l'invention, on considère que la membrane pare-vapeur est efficace en condition sèche (humidité relative élevée : 70% à 100 % de HR) si l'épaisseur d'air équivalente pour la diffusion de vapeur d'eau (S_{d}) est supérieure à 5, supérieure à 10, de préférence supérieure à 20.

Selon l'invention, on considère que la membrane pare-vapeur est efficace en condition humide (humidité relative faible : 50 % de HR et moins) si l'épaisseur d'air équivalente pour la diffusion de vapeur d'eau (S_{d}) est inférieure à 5, de préférence inférieure à 1 et mieux inférieure à 0,8.

Selon l'invention, on considère que la membrane possède de bonnes propriétés hygrorégulantes si la variation d'épaisseur d'air équivalente pour la diffusion de vapeur d'eau (S_{d}) entre des conditions d'humidité relative faible (50 % de HR et moins) et des conditions d'humidité relative (HR) élevée (70% à 100 % de HR) est supérieure à 4, supérieure à 5, de préférence supérieure à 10.

L'épaisseur d'air équivalente (S_{d}) peut être déterminée conformément aux normes EN1931 et EN ISO12572.

Bien que la partie active présente en principe une tenue mécanique lui permettant d'être utilisée seule, c'est-à-dire sans couche de support, il peut être intéressant, en particulier pour des couches actives de faible épaisseur (inférieure à 50 µm) ou pour des couches d'épaisseurs supérieures mais ne présentant pas seules de bonnes propriétés mécaniques, de la renforcer par une structure mécanique perméable à l'air et dont la résistance à la diffusion de la vapeur d'eau est donc négligeable par rapport à celle de la couche active, imperméable à l'air.

Dans un mode de réalisation avantageux, la membrane pare-vapeur comprend donc en outre une couche de renfort ou de protection perméable à l'air, directement en contact avec la partie active, c'est-à-dire avec l'une des deux couches constituant la partie active. Cette couche support peut être une grille, une plaque perforée, une mousse à porosité ouverte ou un textile tissé ou non tissé, perméable à l'air. Il s'agit de préférence d'un textile perméable à l'air, de préférence d'un non-tissé. On peut citer à titre d'exemples de couches de support particulièrement préférées les non-tissés en fibres de polypropylène ou de polyester ou en fibres de verre. La ou les couches de support sont de préférence fixées sur la couche polymère active, par lamination de type collage au moyen d'une colle.

La présente invention englobe également des membranes où une structure de renfort, telle qu'une grille ou un non-tissé, est incorporée dans la partie active de la membrane et plus particulièrement dans une couche polymère ou entre deux couches de la partie active.

La partie active peut être constituée de la première couche polymère active. Dans ce cas, la partie active de la membrane est mono-couche.

La partie active peut comprendre une deuxième couche polymère active. La partie active comprend alors la couche polymère active et au moins une deuxième couche polymère.

La partie active peut comprendre une deuxième et une troisième couche polymère active. La première couche de polymère active est de préférence située entre la deuxième et la troisième couche polymère active. La partie active comprend alors la couche polymère active, la deuxième et la troisième couche polymère.

La deuxième et la troisième couche active sont de préférence choisies parmi des couches de polymères hydrophobes, notamment choisis dans le groupe constitué de polypropylène, polyéthylène, poly(éthylène-co-propylène), homopolymères et copolymères de monomères vinyliques choisis parmi le chlorure de vinyle, chlorure de vinylidène, fluorure de vinyle, fluorure de vinylidène, tétrafluoroéthylène et acrylonitrile.

Dans ce cas, la partie active est de préférence une membrane obtenue de manière connue par co-extrusion de polymères thermoplastiques formant les différentes couches, par thermocollage d'un film sur la couche polymère active, ou par dépôt d'un revêtement sur une des deux faces de la couche polymère active.

Lorsque la recyclabilité est un critère essentiel, il est préférable que les proportions d'amidon en poids ne dépassent pas 30 % du poids total de la membrane pare-vapeur. Dans ce cas, les proportions d'amidon seront fonction de la présence éventuelle d'une deuxième couche de polymère active et d'une éventuelle couche de renfort.

La partie active de la membrane est de préférence une structure mono-couche constituée de la couche polymère telle que définie ci-dessus.

La première couche de polymère active est une couche continue, non perforée. Elle est de ce fait imperméable aux fluides, qu'ils soient liquides ou gazeux.

La deuxième et éventuellement la troisième couche polymère active est en polymère organique et ont généralement une épaisseur inférieure à celle de la première couche polymère active. L'épaisseur des deuxième et troisième couche active doit être extrêmement fine pour éviter d'annuler les propriétés hygrorégulantes de la première couche polymère active. Le rapport de l'épaisseur de la première couche à l'épaisseur de la deuxième couche ou troisième couche est avantageusement compris entre 1,5/1 et 1000/1, de préférence entre 2/1 et 500/1, en particulier entre 3/1 et 200/1. La deuxième ou troisième couche constituée d'un polymère hydrophobe présente avantageusement une épaisseur :
- supérieure ou égale à 0,8 µm, supérieure ou égale à 0,9 µm ou supérieure ou égale à 1,0 µm, et/ou
- inférieure ou égale à 20 µm, inférieure ou égale à 10 µm, inférieure ou égale à 5 µm ou inférieure ou égale à 2,5 µm.

La deuxième couche en polymère organique est de préférence directement en contact avec la première couche, c'est-à-dire l'interface entre les couches est de préférence exempte d'adhésif.

Une membrane pare-vapeur avec une couche polymère active comprenant de l'amidon et un polyoléfine choisie parmi le polyéthylène, le polypropylène, un copolymère éthylène-propylène ou de poly(chlorure de vinylidène) est un mode de réalisation particulièrement préféré de la membrane pare-vapeur utilisée dans le procédé de la présente invention.

La partie active de la membrane pare-vapeur utilisée dans le procédé de la présente invention a avantageusement une épaisseur comprise entre 25,0 µm et 240 µm, de préférence entre 30 µm et 120 µm, ces valeurs correspondant à la partie active de la membrane mais n'englobent pas une éventuelle structure de renfort et/ou de protection.

La membrane pare-vapeur est appliquée sous forme de plusieurs bandes (ou de lés). Ces bandes ont une largeur supérieure ou égale à 0,5 m, de préférence supérieure ou égale à 1 m. La longueur des bandes dépend de la hauteur des murs à isoler. La longueur est supérieure à 0,5 m, de préférence supérieure à 1,0 m ou supérieure à 2 m. Les bandes de membrane situées cote à cote se chevauchent sur leur longueur. Le chevauchement est d'au moins 2 cm, de préférence d'au moins 5 cm, voire d'au moins 8 cm ou de 10 cm.

De préférence, les zones de chevauchements, d'ouverture ou de pénétration sont scellées. Cela peut être fait grâce à du ruban adhésif ou du mastic.

De préférence, le mur ou la paroi de la pièce ou le mur du bâtiment dont il s'agit d'améliorer l'étanchéité à l'air sont isolés, c'est-à-dire recouverts, par un matériau isolant thermique. La membrane pare-vapeur est :
- fixée sur le matériau isolant thermique ou
- incorporée dans le matériau isolant thermique.

Dans un mode de réalisation du procédé d'amélioration de l'étanchéité à l'air d'un bâtiment ou d'une pièce d'un bâtiment,
- on applique un matériau isolant, de préférence sous forme d'éléments isolants juxtaposés, sur la face interne des murs dudit bâtiment ou de ladite pièce d'un bâtiment, puis
- on applique la membrane pare-vapeur sur la face interne du mur recouvert du matériau isolant thermique, c'est à dire sur la face interne du matériau isolant. La face interne est la face tournée vers l'intérieur d'un bâtiment ou d'une pièce

Selon ce mode de réalisation, la membrane est fixée sur le matériau isolant comprenant plusieurs éléments isolants. Les dimensions des éléments du matériau isolant sont différentes de celles de la membrane. C'est de cette manière que la membrane permet d'améliorer l'étanchéité du bâtiment.

La membrane pare-vapeur de la présente invention est en une position interne par rapport au matériau d'isolation thermique, de préférence en contact direct avec celui-ci. La fixation peut se faire par n'importe quel moyen approprié n'entamant pas significativement l'étanchéité à l'air de la membrane. Elle peut se faire par exemple par collage, agrafage ou au moyen d'un système de fixation mécanique par crochets et boucles textiles (en anglais *« hook and loop fastener* ») de type scratch/Velcro^{®} ou un système de fixation mécanique de type Optima^{®} ou Integra^{®}.

Dans un autre mode de réalisation du procédé de la présente invention, la membrane pare-vapeur est intégrée ou collé dans le matériau isolant et fixée au mur de la pièce ou du bâtiment en même temps que celui-ci. La membrane est alors orientée parallèlement aux deux surfaces principales du matériau d'isolation et est située de préférence plus proche de la surface principale tournée vers l'intérieur de la pièce ou du bâtiment que de la surface principale tournée vers le mur.

Le matériau isolant thermique peut être n'importe quel matériau isolant perméable à la vapeur d'eau et englobe notamment les mousses et les matériaux à base de fibres. Il est de préférence en fibres minérales (laine minérale) ou en fibres organiques naturelles (fibres lignocellulosiques, chanvre, lin, ouate de cellulose, laine animale), synthétiques (fibres de polyester) ou artificiels. Il est de préférence en laine minérale.

### Exemples

### I. détermination des valeurs d'épaisseur d'air Sd

Les valeurs d'épaisseur d'air Sd correspondant aux taux de transmission à la vapeur d'eau ("Water Vapour Transmission Rate" (WVTR) ont été mesurés à l'aide d'un appareil un Gintronic Gravitest en condition sèche (25%HR) et en condition humide (90% HR) conformément aux normes EN1931 et EN ISO12572.

Cette épaisseur est exprimée en mètres et correspond à l'épaisseur de la couche d'air qui opposerait une résistance équivalente à la diffusion de la vapeur d'eau. L'épaisseur d'air équivalente (Sd) correspond à l'équation suivante : (Sd = (δaΔP)/WVTR) avec
δ a is la permeabilité à la vapeur d'eau de l'air (=1,6848 x 10⁻² g.m⁻¹.jour⁻¹.Pa⁻¹), ΔP est la difference de pression de chaque coté de la couche en Pa (la pression d'un côté de la couche = humidité relative x PsatH₂O = humidité relative x 2812 Pa).

### II. Membranes mono-couche

Le polypropylène donne de bons résultats avec tous les procédés d'obtention des couches.

Les films fabriqués par extrusion en plaque ou gonflage ont des propriétés hygrorégulantes intéressantes. Ces propriétés peuvent être optimisées, en fonction du procédé d'obtention, en jouant sur la quantité d'amidon, l'épaisseur de la couche et la nature et les propriétés des polyoléfines
Des propriétés hygrorégulantes très élevées ont été obtenues avec des couches à base de LDPE/amidon fabriqués par presse. On obtient notamment des valeurs Sd inférieures à 1 m en condition humide, et une différence de valeurs Sd de 59,5 m et 41,2 m entre conditions sèches et humides.

| Memb. | Polymère Hydro. | Quantité amidon (en poids) | Tx Cristallinité | Ep. | Procédé | Sd 25 % HR | Sd 90 % HR | ΔSd |
|---|---|---|---|---|---|---|---|---|
| 1 | PP | 50 | | 140 | Press. | 20 | 0,1 | 19,9 |
| 2 | PP | 50 | 13,0 | 98 | Ext. P | 24 | 4 | 20 |
| 3 | PP | 50 | 17,2 | 75 | Ext. P | 7 | 0,8 | 6,2 |
| 4 | PP | 60 | 10,4 | 160 | Ext. P | 20 | 0,5 | 19,5 |
| 5 | LDPE | 30 | | 145 | Press. | 60,0 | 0,5 | 59,5 |
| 6 | LDPE | 40 | | 145 | Press. | 42,3 | 0,8 | 41,5 |
| 7 | LDPE | 40 | | 80 | Ext. P | 13,6 | 7,2 | 6,4 |
| 8 | LDPE | 40 | 16,3 | 114 | Ext. P | 28,7 | 13,7 | 15 |
| 9 | LDPE | 50 | 17,6 | 109 | Ext. P | 14,0 | 0,8 | 13,2 |
| 10 | LDPE | 50 | | 80 | Ext. P | 11,3 | 2,8 | 8,5 |
| 11 | LDPE | 60 | | 123 | Ext. P | 19,0 | 3,0 | 16 |
| 12 | LDPE | 60 | 13,6 | 160 | Ext. P | 24,0 | 3,0 | 21 |
| 13 | LDPE | 40 | 16,4 | 80 | Ext-G | 22,0 | 10,0 | 12 |
| 14 | HDPE | 40 | 16,0 | 30 | Ext-G | 6,0 | 3,6 | 3,4 |

Le comportement hygrorégulateur des membranes selon l'invention est très intéressant puisqu'une grande différence de Sd est observée.

### II. Membranes bi-couches

Une membrane comprenant une partie active à trois couches a été fabriquée. La première couche active comprend du polyéthylène haute densité et de l'amidon (membrane 15 ci-dessus). Elle a une épaisseur de 30 µm.

La deuxième et la troisième couche active sont des couches de polyéthylène. Elles ont une épaisseur de 3 µm.

Une membrane avec une couche active de trois couches HDPE - HDPE/Amidon -HDPE de 36 µm d'épaisseur a été produite avec succès.

Les valeurs Sd sont résumées dans le tableau 3.

| Memb. | Quantité amidon (en pds) | Ep. | Procédé | Sd 25 % HR | Sd 90 % HR | ΔSd |
|---|---|---|---|---|---|---|
| 15 | 40 | 30 | Ext. G | 6,0 | 3,6 | 3,4 |
| 26 | < 40 % | 36 | Ext. G | 17 | 7 | 10 |

Ainsi, le comportement intelligent de ce film tricouches est bien prononcé. L'application de couches additionnelles hydrophobes augmente le pouvoir hygrorégulant (ΔSd élevé).Cette membrane tri-couches présente des valeurs de Sd plus élevées en conditions sèche et humide. Ainsi, la membrane réalisée bloque mieux la vapeur d'eau en hiver (faible humidité relative) mais laisse moins circuler la vapeur d'eau en été (humidité relative élevée).

## Revendications

1. Membrane pare-vapeur hygrorégulante comprenant une partie active comprenant une première couche polymère active à base d'amidon et d'un polymère hydrophobe choisi dans le groupe comprenant les homopolymères et copolymères de monomères vinyliques et de polyesters.

2. Membrane pare-vapeur hygrorégulante selon la revendication 1 **caractérisé en ce que** la partie active est constituée de la première couche polymère active.

3. Membrane pare-vapeur hygrorégulante selon la revendication 1 **caractérisé en ce que** la partie active comprend au moins une deuxième couche polymère active.

4. Membrane pare-vapeur hygrorégulante selon l'une quelconque des revendications précédentes, **caractérisé en ce que** le pourcentage en poids d'amidon, par rapport au poids d'amidon et de polymère hydrophobe dans la première couche de polymère active est supérieure à 15 %.

5. Membrane hygrorégulante selon l'une quelconque des revendications précédentes, **caractérisé en ce que** l'amidon est choisi parmi l'amidon d'origine végétale marine, l'amidon de maïs, l'amidon de blé, l'amidon de pomme de terre, l'amidon de tapioca, l'amidon de pois, l'amidon de riz ou leurs mélanges, ou encore d'un polymère dérivé de l'amidon.

6. Membrane pare-vapeur hygrorégulante selon l'une quelconque des revendications précédentes, **caractérisé en ce que** la première couche polymère active a un taux de cristallinité compris entre 2 et 40%.

7. Membrane hygrorégulante selon l'une quelconque des revendications précédentes, **caractérisé en ce que** l'amidon est sous forme de particules dont le diamètre moyen est compris entre 2 et 50 µm.

8. Membrane pare-vapeur hygrorégulante selon l'une quelconque des revendications précédentes, **caractérisé en ce que** le pourcentage en poids d'amidon et de polymère hydrophobe dans la première couche de polymère active est supérieure à 50 %.

9. Membrane hygrorégulante selon l'une quelconque des revendications précédentes, **caractérisé en ce que** :
les homopolymères et copolymères de monomères vinylique sont choisi parmi :
- les polyoléfines telles que le polypropylène, le polyéthylène, le poly(éthylène-co-propylène),
- les polymères halogénés tels que le poly(chlorure de vinyle), le poly(chlorure de vinylidène), le poly(fluorure de vinyle), le poly (fluorure de vinylidène), le poly(tétrafluoroéthylène),
- les polymères styréniques tels le polystyrène (PS), les copolymères styrène butadiène (SBR), les copolymères styrène acrylonitrile (SAN), les copolymères styrène butadiène acrylonitrile (ABS), et
- le polyacrylonitrile,
les homopolymères et copolymères de polyesters sont choisis parmi les polyéthylene téréphtalate.

10. Membrane hygrorégulante selon la revendication précédente, **caractérisé en ce que** les polyoléfines sont choisies parmi le groupe constitué par :
- un polyéthylene linaire ou branché tel qu'un polyéthylène ultra-basse densité (ULDPE), polyéthylène basse densité (LDPE), un polyéthylène très basse densité (VLDPE), un polyéthylène linaire basse densité (LLDPE), un polyéthylène moyenne densité (MDPE),un polyéthylène haute densité (HDPE), un polyéthylène haute densité et à masse moléculaire élevée (HDPE-HMW), un polyéthylène haute densité et à masse moléculaire ultra-élevée (HDPE-UHMW),
- un polypropylène tel que le polypropylène homopolymère (PP-H), le polypropylène copolymère (PP-C) bloc ou statistique, le polypropylène élastomère (PP-E), le polypropylène réticulé (PP-R),
- un poly(éthylène-co-propylène),
- un polyisobutylène, un polybut-1-ène, un poly-4-méthylpent-1-ène, un polyisoprène, un polybutadiène, un cyclopentène, un norbornène.

11. Membrane hygrorégulante selon l'une quelconque des revendications précédentes, **caractérisé en ce que** la première couche polymère active comprend un plastifiant choisi parmi les polyols représentant de 5 à 35% en poids du poids de la couche polymère active.

12. Membrane hygrorégulante selon l'une quelconque des revendications précédentes, **caractérisé en ce que** la première couche polymère active comprend des agents de greffage permettant le couplage par liaison de l'amidon et du polymère hydrophobe.

13. Membrane pare-vapeur hygrorégulante selon l'une quelconque des revendications précédentes, **caractérisé en ce que** la première couche polymère active a une épaisseur :
- supérieure à 30 µm et/ou
- inférieure à 240 µm.

14. Membrane hygrorégulante selon l'une quelconque des revendications précédentes, **caractérisé en ce qu'**elle comporte en outre une couche de renfort ou de protection qui est en contact avec la partie active de la membrane.

15. Membrane hygrorégulante selon la revendication précédente, **caractérisé en ce que** la couche de renfort ou de protection est une couche perméable à l'air choisie parmi une grille, une plaque perforée, une mousse à porosité ouverte ou un textile tissé ou non tissé.

16. Système isolant comprenant un matériau isolant thermique et une membrane hygrorégulante selon l'une quelconque des revendications 1 à 15.

17. Système isolant selon la revendication 16 **caractérisé en ce que** le matériau isolant thermique est en fibres minérales ou organiques, naturelles, synthétiques ou artificielles.

18. Procédé d'amélioration de l'étanchéité à l'air d'un bâtiment ou d'une pièce d'un bâtiment comprenant l'application d'une membrane pare-vapeur sur la face interne des murs dudit bâtiment ou de ladite pièce d'un bâtiment, **caractérisé par le fait que** la membrane pare-vapeur est une membrane hygrorégulante comprenant une partie active comprenant une première couche polymère active comprenant une couche polymère à base d'un mélange d'amidon et d'un polymère hydrophobe choisi dans le groupe constitué des homopolymères et copolymères de monomères vinyliques et de polyesters.

19. Procédé selon l'une quelconque des revendications précédentes, **caractérisé par le fait que** la membrane pare-vapeur est appliquée sur le mur sous forme de plusieurs bandes ayant une largeur supérieure ou égale à 0,5 m et une longueur supérieure à 0,5 m.

20. Procédé selon la revendication précédente, **caractérisé par le fait que** les bandes de membrane situées cote à cote se chevauchent sur leur longueur avec un chevauchement d'au moins 2 cm.

21. Procédé selon l'une quelconque des revendications 18 à 20, **caractérisé par le fait que** :
- on applique un matériau isolant thermique, de préférence sous forme d'éléments isolants juxtaposés, sur la face interne des murs dudit bâtiment ou de ladite pièce d'un bâtiment, puis
- on applique la membrane pare-vapeur sur la face interne du mur recouvert du matériau isolant thermique.

22. Procédé selon la revendication précédente, **caractérisé par le fait que** le matériau isolant thermique est en fibres minérales ou organiques, naturelles, synthétiques ou artificielles.
